# EUROPEAN PATENT SPECIFICATION

(11) **EP 4 112 437 B1**
(45) Date of publication and mention of the grant of the patent: **12.02.2025**
(21) Application number: 22178291.5
(22) Date of filing: 10.06.2022
(51) Int. Cl.: B63B 7/08, B63B 35/38, F03D 1/00, B63B 35/44

(54) **MULTI-COMPONENT PNEUMATIC FLOATING PLATFORM**
PNEUMATISCHE MEHRKOMPONENTEN-SCHWIMMPLATTFORM
PLATEFORME FLOTTANTE PNEUMATIQUE À COMPOSANTS MULTIPLES

(30) Priority: 25.06.2021 JP 2021105750
(43) Date of publication of application: 04.01.2023
(73) Proprietor: Chodai Co., Ltd., Tokyo 103-0014 (JP); Waterfront Real Estate Co., Ltd, Nishinomiya-shi, Hyogo 662-0066 (JP)
(72) Inventor: Nakajima, Toshio, Hyogo, 662-0066 (JP); Imai, Motoko, Tokyo, 103-0014 (JP); Kuribayashi, Hiroshi, Tokyo, 103-0014 (JP); Yamashita, Yuuki, Tokyo, 103-0014 (JP)
(74) Representative: Hasegawa, Kan

(56) References cited:
- WO-A1-2018/055471
- US-A1- 2016 156 304

## Description

### BACKGROUND OF THE INVENTION

### 1. Field of the Invention

The present invention relates to multi-component pneumatic floating platforms on which, for example, floating cities can be built, and to floating offshore wind turbine equipment equipped with such multi-component pneumatic floating platforms.

### 2. Description of the Related Art

In recent years, the technology for realizing offshore airports and floating cities/marine cities (referred to as "floating cities" hereinafter) is being developed globally.

For example, in order to realize a very large floating structure (VLFS) extending over several thousands of meters, demonstration experiments of so-called Mega-Floats have been performed on the actual sea from the year 1995 to the year 2000. A Mega-Float is a very large floating platform constructed by connecting a plurality of box type floating structures by welding.

According to these demonstration experiments, it has been pointed out that a very large floating platform has a structural flaw, such as stress concentration, in rough waves. In order to compensate for such a flaw, there has been proposed an idea for completing a single very large floating platform by connecting the plurality of barge type floating structures or semi-submersible floating structures by using movable joints (i.e., hinges). With this idea, it has been confirmed from water tank experiments that safety is ensured even in rough waves.

However, even though this floating platform solves the structural problem of, for example, stress concentration, the floating platform is not suitable for use in an offshore airport or a floating city since the entire floating platform deforms due to the movable joints. Moreover, in either case, since uniform buoyancy has to act on the entire floating platform, if the load on the floating platform changes significantly, as in a floating city, it is difficult to cope with such changes in the load.

On the other hand, several large floating platforms that utilize pneumatic stabilized platforms in place of barge type floating structures have been proposed. The structure of a pneumatic stabilized platform may be one of various types, including a type (air chamber type) provided with a plurality of air chambers by dividing a floating structure with a partition wall and a type (continuous open bottom type) in which a plurality of floating module units each having an open bottom are connected by using hinges or bolts.

Known examples of the former type include a floating structure divided into eight segments by using partitions for the purpose of serving as a pneumatic circular floating buoy (Patent Literature 1: US Patent No. 1667255), a floating-city floating structure that is hermetically provided with a peripheral frame having an open bottom around the lower surface of a flat disk and that is provided with a plurality of compressed air chambers in an internal space surrounded by the lower surface of the flat disk and the inner surface of the peripheral frame so as to maintain equilibrium with a total load applied to the flat disk when set on the water surface (Patent Literature 2: Japanese Unexamined Patent Application Publication No. 52-75840), and a pneumatic floating structure provided with a plurality of cells separated from one another by concrete hexagonal partition walls (Patent Literature 3: US Patent No. 5524549).

However, the floating structures described in Patent Literatures 1 to 3 share a common feature in which the flow of air between air chambers separated by partition walls is blocked, and are thus not suitable for use as the structure of a very large floating platform.

A structure suitable for a very large floating platform can be achieved by connecting a plurality of air chambers and causing air to flow therebetween to attenuate a wave force. Known examples of such a structure that achieves a very large floating platform include a type in which a wave force is attenuated by connecting a plurality of cylindrical floating structures by welding and causing air to flow through gaps between the cylindrical floating structures (Patent Literature 4: US Patent No. 5375550), and a type in which multiple steel cylinders are coupled together (Patent Literature 5: PCT International Publication No. WO 2006/001796 Pamphlet).

Known examples of the latter type include a concrete rectangular-element-coupled floating structure that uses an air pump to compensate for decreasing air (Patent Literature 6: US Patent No. 3276209), an artificial floating island formed of a plurality of floating module units (Patent Literature 7: US Patent No. 5421282), and a floating structure in which a plurality of containers are connected by, for example, bolts and that contains an inflatable bag therein for preventing water intrusion (Patent Literature 8: PCT International Publication No. WO 2014/195579 Pamphlet). In Patent Literature 7, each module unit includes a platform and a side wall for containing air and providing buoyancy, and adjacent module units are connected in a movable manner by using an air feeding mechanism and a hinge mechanism.

Patent literature 9: WO2018/055471 A1) shows a multi-component pneumatic floating platform according to the preamble of claim 1.

### SUMMARY OF THE INVENTION

However, in each of the pneumatic floating structures described in Patent Literatures 1 to 8 described above, the air chambers are exposed to water, so that the air in the air chambers is compressed due to the wave motions. This may cause the air to dissolve readily in the water, and is disadvantageous in terms of a decrease in buoyancy that may occur due to the air dissolving in the water. Moreover, a hinge-connected floating platform having a high degree of freedom may be problematic in terms of tilting and unstableness of a superstructure.

Furthermore, the floating-city floating structure described above in Patent Literature 2 and the artificial floating island described above in Patent Literature 7 are both not suitable for city-scale infrastructure construction, and are problematic in terms of, for example, a lack of spaces for accommodating lifeline infrastructure important for maintaining normalcy in daily life.

For the challenge of solving the aforementioned problems and building a floating city, an object of the present invention is to provide a multi-component pneumatic floating platform that can reduce rocking even in waves, can reduce tilting caused by strong winds, can prevent air within an air chamber from dissolving in water, and can be readily constructed, and also to provide floating offshore wind turbine equipment equipped with such a multi-component pneumatic floating platform.

In order to solve the aforementioned problems, the present invention provides a multi-component pneumatic floating platform including a plurality of floating module units and a connection unit. Each of the floating module units includes a shell and an air chamber provided inside the shell. The shell has an open bottom and is surrounded by a horizontal top wall and a side wall extending downward from a peripheral edge of the top wall. The connection unit connects adjacent floating module units of the plurality of the floating module units arranged in a horizontal direction. Each of the floating module units has a flexible membrane that divides the air chamber into an air layer and a water layer.

The membrane is installed in a loose state so that the membrane can conform to the wave of the water layer. Preferably, the flexible membrane seals the air layer hermetically. A peripheral edge of the membrane in a loose state may be joined to the side wall of the shell. The floating module unit may have a pressure adjustment unit configured to adjust air pressure in the air layer within the air chamber. The connection unit may be a 3D truss beam. The connection unit may be rigid and have a rigid structure. The connection unit may have an accommodation space for lifeline infrastructure.

Furthermore, a floating offshore wind turbine equipment includes the aforementioned multi-component pneumatic floating platform. Moreover, the multi-component pneumatic floating platform may have a moonpool surrounded by the floating module units and a turret-type mooring device installed in the moonpool. The turret-type mooring device may have a ball bearing whose outer periphery is coupled to the floating module unit disposed around the moonpool and that rotatably supports the multi-component pneumatic floating platform, and a cylindrical column that is detachably held by an inner periphery of the ball bearing and that is connected to a mooring line.

The multi-component pneumatic floating platform floating on a water surface according to the present invention employs the aforementioned configurations, so that a stable city-scale multi-component pneumatic floating platform with reduced wave-induced rocking and wind-induced tilting can be constructed inexpensively.

Furthermore, the multi-component pneumatic floating platform according to the present invention can be constructed on-site by connecting the plurality of floating module units by using a connection unit, such as a 3D truss beam. In addition, after the multi-component pneumatic floating platform is constructed, the number of floating module units can be increased or decreased as appropriate, and a removed floating module unit is reusable at another site.

Furthermore, the multi-component pneumatic floating platform according to the present invention can be used in floating offshore wind turbine equipment, so as to have both high dynamic stability against waves and high static stability against strong winds.

### BRIEF DESCRIPTION OF THE DRAWINGS

Fig. 1 is a perspective view illustrating an assembly structure of a floating module unit according to a first embodiment of the present invention;
Fig. 2 is a cross-sectional view illustrating a state where the floating module unit according to the first embodiment of the present invention is floating offshore;
Figs. 3A to 3D each illustrate a membrane joined to the floating module unit according to the first embodiment of the present invention, Fig. 3A schematically illustrating an example where a joint section is provided at a top end within a shell, Fig. 3B illustrating an example where the joint section is provided at a bottom end within the shell, Fig. 3C schematically illustrating an example where the joint section is provided at an intermediate portion within the shell, Fig. 3D schematically illustrating an example where a bag-like membrane is fixed within the shell via the joint section;
Fig. 4 schematically illustrates a multi-component pneumatic floating platform in a state where a plurality of floating module units according to the first embodiment of the present invention are arranged and are coupled together by using 3D truss beams;
Fig. 5 is a schematic cross-sectional view taken along line V-V in Fig. 4;
Figs. 6A to 6C schematically illustrate a construction process of the multi-component pneumatic floating platform according to the first embodiment of the present invention; and
Figs. 7A and 7B illustrate offshore wind turbine equipment using the multi-component pneumatic floating platform according to a second embodiment of the present invention, Fig. 7A being a schematic plan view, Fig. 7B being a schematic cross-sectional view taken along line VIIB-VIIB in Fig. 7A.

### DESCRIPTION OF THE PREFERRED EMBODIMENTS

Specific embodiments of a multi-component pneumatic floating platform according to the present invention will now be described with reference to the drawings that illustrate the embodiments.

### First Embodiment

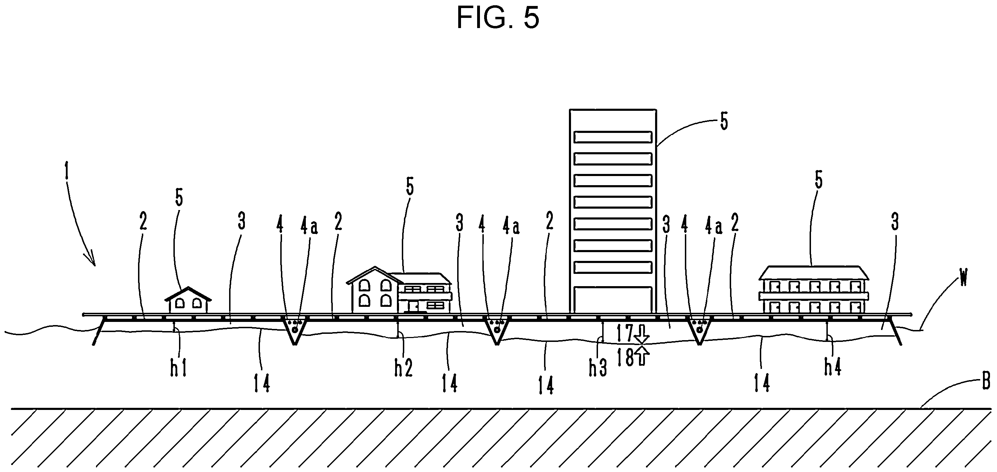

In Fig. 5, reference sign 1 denotes a multi-component pneumatic floating platform floating on a water surface W and disposed away from a bottom B of the water, reference sign 2 denotes each floating module unit having an open bottom and provided with an air chamber 3 therein, reference sign 4 denotes each rigid connection unit connecting a plurality of adjacent floating module units 2 to establish the multi-component pneumatic floating platform 1, and reference sign 5 denotes each building, such as an architectural structure, erected on the multi-component pneumatic floating platform 1.

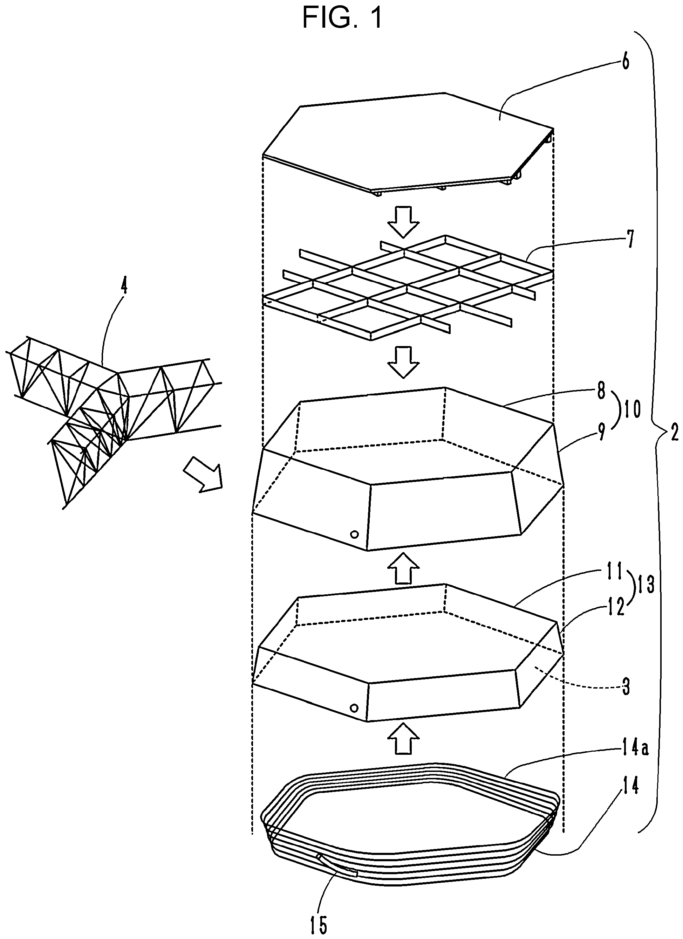

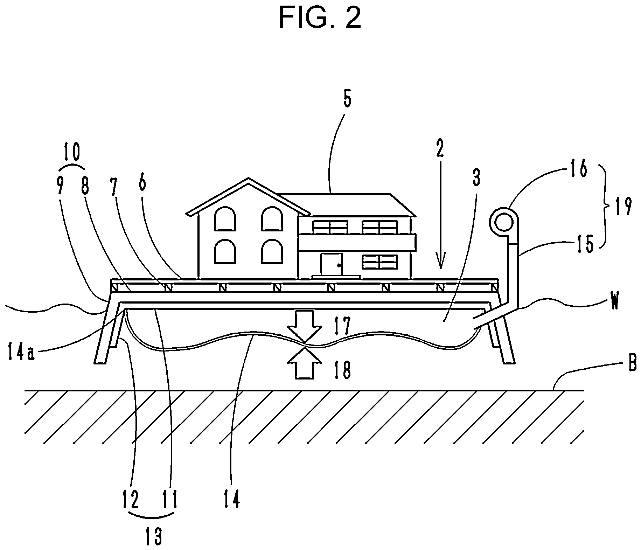

As shown in Figs. 1 and 2, each floating module unit 2 includes a flat polygonal floor 6, a lattice-like flange 7 on which the floor 6 is placed, a shell 10 that has a top surface above which the floor 6 is placed with the flange 7 interposed therebetween, is surrounded by a top wall 8 and a side wall 9 extending downward from the peripheral edge of the top wall 8, and has an open bottom, a seal cover 13 that is surrounded by an upper wall 11 and a peripheral wall 12 extending downward from the peripheral edge of the upper wall 11 and that is attached inside the shell 10, and a flexible membrane 14 that is joined to the air chamber 3 within the seal cover 13.

Although the flange 7 is placed on the top surface of the shell 10 and the floor 6 is placed on the flange 7 in this embodiment, the floor 6 and the flange 7 may be installed as necessary. The buildings 5 may be erected directly on the top wall 8 if the shell 10 has sufficient strength. Furthermore, although the side wall 9 of the shell 10 is inclined outward from the peripheral edge of the top wall 8, the side wall 9 may extend downward orthogonally from the peripheral edge of the top wall 8.

Moreover, the floor 6 and the shell 10 may be manufactured by using a material, such as wood, steel, fiber-reinforced plastic (FRP), or concrete.

As shown in Fig. 2, the air chamber 3 of the floating module unit 2 is divided into an air layer and a water layer by the membrane 14 composed of a flexible material. The flexible material is, for example, polyester or polypropylene and has functions for conforming to the surface of the water layer and for forming an interface between the air layer and the water layer.

In order to conform to the wave, a joint section 14a at the peripheral edge of the membrane 14 in a loose state is joined to the peripheral wall 12 of the seal cover 13 so that an impact of a wave force is alleviated, thereby suppressing tilting of the floating module unit 2.

The seal cover 13 does not have to be attached so long as the interior of the shell 10 is hermetically sealed. In that case, the joint section 14a at the peripheral edge of the membrane 14 may be joined to the side wall 9 of the shell 10.

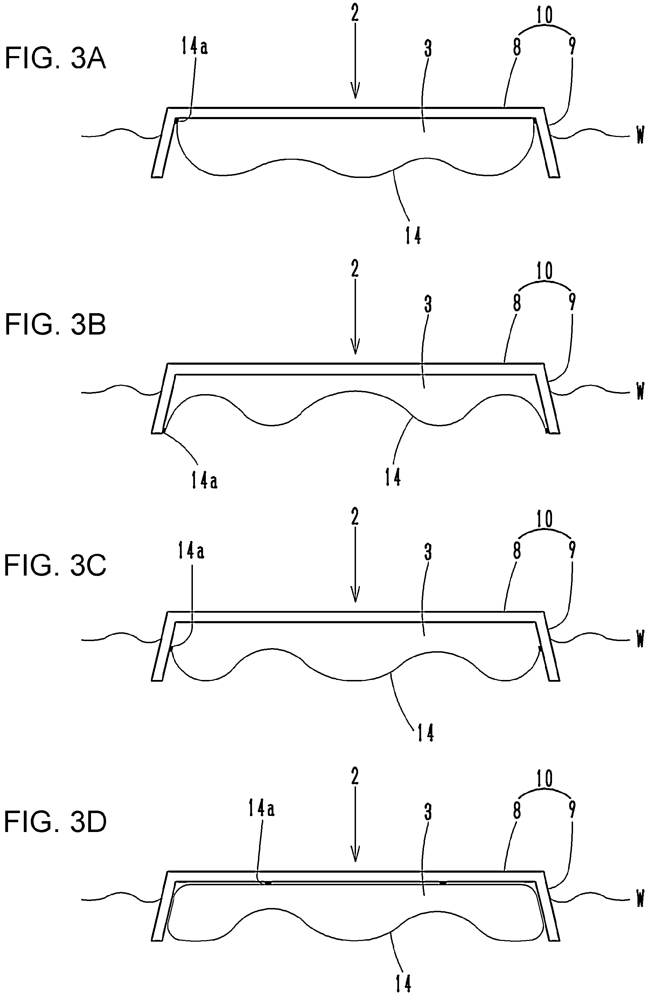

Referring to Figs. 3A to 3C, in order to attach the membrane 14 that forms the air chamber 3 within the shell 10 (or the seal cover 13) of the floating module unit 2, the joint section 14a of the membrane 14 may be joined to the top end of the side wall 9, as shown in Fig. 3A, the joint section 14a of the membrane 14 may be joined to the bottom end of the side wall 9, as shown in Fig. 3B, or the joint section 14a of the membrane 14 may be joined to an intermediate portion of the side wall 9, as shown in Fig. 3C.

As an alternative to the examples shown in Figs. 3A to 3C in which the membrane 14 has the joint section 14a provided at the free peripheral edge, the membrane 14 may be closed in the form of a bag and may be joined to the inner side of the shell 10 (or the seal cover 13) via the joint section 14a, as shown in Fig. 3D.

Furthermore, as an alternative to this embodiment in which the joint section 14a of the membrane 14 is bonded to the inner side of the side wall 9 or the top wall 8 by using, for example, an adhesive, the joint section 14a may be fixed to securing members (not shown) evenly spaced apart from each other on the inner side of the side wall 9, and the peripheral edge of the membrane 14 does not have to be in close contact with the side wall 9.

Furthermore, as shown in Fig. 2, as a pressure adjustment unit 19 that adjusts air pressure 17 in the air layer within the air chamber 3, the floating module unit 2 includes an air pump 16 that compresses the air and an air delivery pipe 15 that supplies the compressed air from the air pump 16 to the air layer within the air chamber 3.

The pressure adjustment unit 19 adjusts the air pressure 17 in the air layer within the air chamber 3 so as to balance out the air pressure 17 and water pressure 18, thereby adjusting the buoyancy of the floating module unit 2. Although not shown, each floating module unit 2 shown in Fig. 5 is individually provided with a pressure adjustment unit similar to that in Fig. 2.

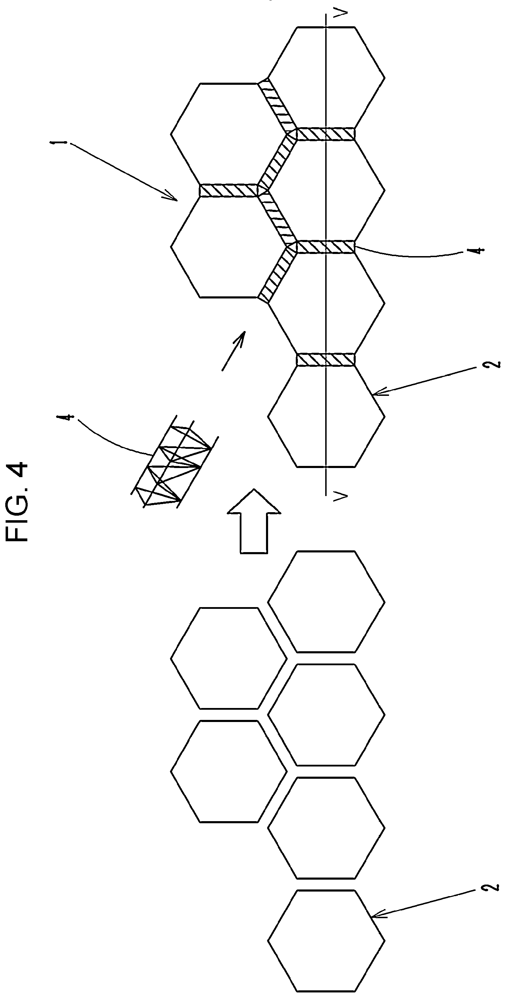

Each connection unit 4 is specifically formed of a rigid structural member, such as a steel 3D truss beam shown in Figs. 1 and 4. As shown in Fig. 5, a space provided in each connection unit 4, such as a 3D truss beam, is used as a space for accommodating lifeline infrastructure 4a, such as a water pipe, a gas pipe, and an electric cable.

Furthermore, as shown in Fig. 4, the connection units 4 rigidly couple the floating module units 2 to one another and also bend in response to a large force to increase stability by reducing wave-induced rocking and wind-induced tilting of the floating module units 2, thereby solving problems such as tilting and unstableness of the buildings 5 to be erected on the multi-component pneumatic floating platform 1.

Next, the usage and the advantages of this embodiment will be described.

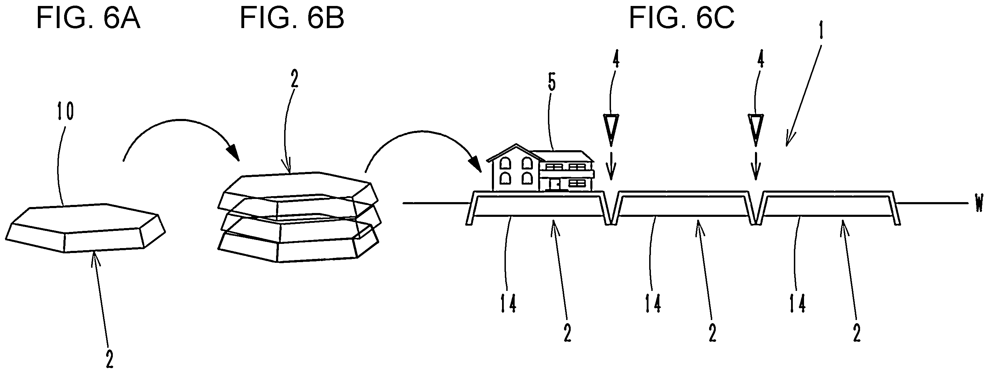

Referring to Figs. 6A to 6C, the multi-component pneumatic floating platform 1 according to this embodiment can be mass-produced readily by manufacturing floating module units 2, each having the assembly structure shown in Fig. 1, at a factory in a step shown in Fig. 6A. In that case, the shell 10 may be manufactured by using precast concrete or by press-working a steel plate.

Subsequently, in a step shown in Fig. 6B, the plurality of floating module units 2 are stacked and are transported to a construction site. In a step shown in Fig. 6C, after the plurality of floating module units 2 are floated on the water surface W at the construction site, adjacent floating module units 2 are coupled together by using the connection units 4, such as 3D truss beams, whereby the multi-component pneumatic floating platform 1 is constructed, as shown in Fig. 5. Subsequently, the buildings 5 are erected on the multi-component pneumatic floating platform 1.

As shown in Fig. 5, when the buildings 5 are to be erected on the multi-component pneumatic floating platform 1, the floating module units 2 can each cause the pressure adjustment unit (not shown) to adjust the air pressure 17 in the air layer within the air chamber 3, thereby balancing out the air pressure 17 and the water pressure 18 and adjusting the buoyancy. Thus, each floating module unit 2 can flexibly cope with conditions of, for example, the buildings 5 on the multi-component pneumatic floating platform 1 and heavy equipment used during the construction.

In detail, in the case of the multi-component pneumatic floating platform 1 shown in Fig. 5, the air pressure 17 in the air layers of the respective floating module units 2 can be adjusted with the pressure adjustment units in view of the load from the buildings 5 such that the air layers in the respective floating module units 2 increase in thickness in the following order starting from the smallest thickness: h1, h2, h4, and h3.

Accordingly, the multi-component pneumatic floating platform 1 according to this embodiment can be constructed by floating the plurality of floating module units 2 on the water surface W and coupling adjacent floating module units 2 together by using the connection units 4, so that the number of floating module units 2 can be increased or decreased as appropriate, and a removed floating module unit 2 is relocatable and reusable.

Furthermore, since the buildings 5 serving as architectural structures to be erected on the multi-component pneumatic floating platform 1 are not in contact with the ground, the buildings 5 are less likely to be affected by earthquakes.

As shown in Fig. 5, the spaces formed by the connection units 4, such as 3D truss beams, to be used as couplers in the multi-component pneumatic floating platform 1 can each be utilized as a space for accommodating the lifeline infrastructure 4a, such as a water pipe, a gas pipe, and an electric cable, so that it is not necessary to newly ensure an accommodation space for the lifeline infrastructure 4a.

### Second Embodiment

Next, a second embodiment in which the multi-component pneumatic floating platform 1 is used as a floating structure of floating offshore wind turbine equipment will be described.

In the following description, components identical to those in the first embodiment will be given the same reference signs, and the differences from the first embodiment will be mainly described.

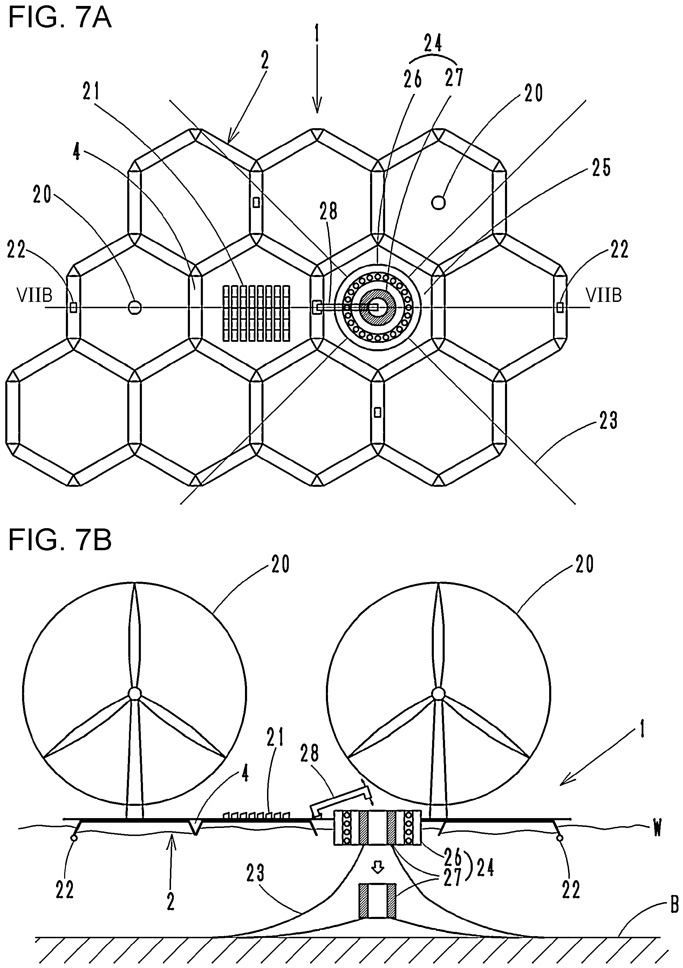

In Figs. 7A and 7B, reference sign 20 denotes each wind turbine equipped with a wind turbine generator and erected on the multi-component pneumatic floating platform 1 constituted of the floating module units 2 and the connection units 4, reference sign 21 denotes a solar panel for photovoltaic power generation, reference sign 22 denotes each propulsion thruster provided at the bottom of the floating module units 2, and reference sign 24 denotes a turret-type mooring device that moors the multi-component pneumatic floating platform 1 to the bottom B of the water by using a mooring line 23. A power transmission cable required for transmitting generated electric power is extended to the terminal end of the multi-component pneumatic floating platform 1 via the accommodation spaces in the connection units 4 formed of, for example, 3D truss beams, and is subsequently connected to an underwater cable so as to transmit the generated electric power ashore.

The turret-type mooring device 24 is installed in a moonpool 25 surrounded by the floating module units 2 of the multi-component pneumatic floating platform 1. The turret-type mooring device 24 is constituted of a ball bearing 26 whose outer periphery is coupled to the floating module unit 2 disposed around the moonpool 25 and that rotatably supports the multi-component pneumatic floating platform 1, and a cylindrical column 27 that is detachably held by the inner periphery of the ball bearing 26 and that is connected to the mooring line 23.

The turret-type mooring device 24 is rigidly coupled to the floating module unit 2 disposed around the moonpool 25 by using, for example, a beam (not shown).

The floating module unit 2 disposed at the outer side of the turret-type mooring device 24 is provided with a lock mechanism 28 that engages with the cylindrical column 27 to inhibit rotation of the multi-component pneumatic floating platform 1, so that the multi-component pneumatic floating platform 1 is prevented from rotating freely around the turret-type mooring device 24 due to a tidal current or a wind force.

Next, the usage and the advantages of this embodiment will be described.

With regard to the floating offshore wind turbine equipment according to this embodiment, the multi-component pneumatic floating platform 1 is first constructed by performing a process similar to that for the multi-component pneumatic floating platform 1 according to the first embodiment shown in Figs. 6A to 6C such that the moonpool 25 surrounded by any one of the floating module units 2 is formed. Subsequently, the turret-type mooring device 24 is installed in the moonpool 25 via, for example, a beam (not shown), and the turret-type mooring device 24 is moored to the bottom B of the water by using the mooring line 23.

Then, the wind turbines 20 and the solar panel 21 are installed on specific floating module units 2 in view of the load to be applied to the multi-component pneumatic floating platform 1, and the power transmission cable for transmitting electric power generated by the wind turbines 20 is accommodated in the accommodation spaces of the connection units 4, whereby the floating offshore wind turbine equipment equipped with the multi-component pneumatic floating platform 1 is completed.

In the floating offshore wind turbine equipment according to this embodiment, the plurality of propulsion thrusters 22 are arranged at the bottom of the floating module units 2 in a well-balanced manner, so that when the lock mechanism 28 releases the locked state of the turret-type mooring device 24, the multi-component pneumatic floating platform 1 can rotate freely around the turret-type mooring device 24, whereby the rotation of the multi-component pneumatic floating platform 1 on which the wind turbines 20 is installed can be controlled in accordance with the wind direction.

In this case, the electric power generated by the solar panel 21 or by the wind force can be used as a power source for an electric motor that rotationally drives each thruster 22.

Furthermore, in an emergency situation, such as during a typhoon, evacuation of the floating offshore wind turbine equipment is possible by removing the cylindrical column 27 from the turret-type mooring device 24 and towing the floating offshore wind turbine equipment to a safe location.

Moreover, since the floating offshore wind turbine equipment is moored to a single spot at the bottom B of the water by using the turret-type mooring device 24, there is no risk of entanglement of the mooring line 23.

Accordingly, with the floating offshore wind turbine equipment equipped with the multi-component pneumatic floating platform 1 according to this embodiment, the multi-component pneumatic floating platform 1 has stability against waves and strong winds and is rotatable and movable if necessary, thereby enabling stable electric power generation in accordance with various weather conditions.

The multi-component pneumatic floating platform according to the present invention can be used for various purposes, such as for floating cities, offshore wind power generation, and oil drilling. In particular, although the floating offshore wind turbine equipment is attracting attention globally as decarbonized energy technology and domestic and international corporations have already embarked on the business aspect of the floating offshore wind turbine equipment, there are still challenges with respect to stable wind power generation and positional retention at offshore locations where the water is deep. It is expected that the multi-component pneumatic floating platform according to the present invention can be utilized in various fields.

## Claims

1. A multi-component pneumatic floating platform (1) comprising:
a plurality of floating module units (2), each of plurality of floating module units (2) including a shell (10) and an air chamber (3) provided inside the shell (10), the shell (10) having an open bottom and being surrounded by a horizontal top wall (8) and a side wall (9) extending downward from a peripheral edge of the top wall (8); and
a connection unit (4) that connects adjacent floating module units (2) of a plurality of the floating module units (2) arranged in a horizontal direction, wherein
each of the floating module units (2) has a flexible membrane (14), the multi-component pneumatic floating platform being **characterised in that** the membrane of each floating module units divides the air chamber (3) into an air layer and a water layer, and **in that**
the membrane (14) is installed in a loose state.

2. The multi-component pneumatic floating platform (1) according to Claim 1,
wherein the side wall (9) of the shell (10) is inclined outward or placed vertically downward from the peripheral edge of the top wall (8).

3. The multi-component pneumatic floating platform (1) according to Claim 1 or 2,
wherein the flexible membrane (14) is composed of polyester or polypropylene.

4. The multi-component pneumatic floating platform (1) according to any one of Claims 1 to 3,
wherein the floating module unit (2) has a pressure adjustment unit configured to adjust air pressure (17) in the air layer within the air chamber (3).

5. The multi-component pneumatic floating platform (1) according to any one of Claims 1 to 4,
wherein the connection unit (4) is a 3D truss beam.

6. The multi-component pneumatic floating platform (1) according to any one of Claims 1 to 5,
wherein the connection unit (4) has an accommodation space for lifeline infrastructure (4a).

7. A floating offshore wind turbine equipment comprising:
the multi-component pneumatic floating platform (1) according to any one of Claims 1 to 6.

8. The floating offshore wind turbine equipment according to Claim 7,
wherein the multi-component pneumatic floating platform (1) has a moonpool (25) surrounded by the floating module units (2) and a turret-type mooring device (24) installed in the moonpool (25).

9. The floating offshore wind turbine equipment according to Claim 8,
wherein the turret-type mooring device (24) has a ball bearing (26) whose outer periphery is coupled to the floating module unit (2) disposed around the moonpool (25) and that rotatably supports the multi-component pneumatic floating platform (1), and a cylindrical column (27) that is detachably held by an inner periphery of the ball bearing (26) and that is connected to a mooring line (23).

## Patentansprüche

1. Pneumatische Mehrkomponenten-Schwimmplattform (1), umfassend:
eine Vielzahl von Schwimmmoduleinheiten (2), wobei jede aus der Vielzahl von Schwimmmoduleinheiten (2) eine Schale (10) und eine Luftkammer (3) beinhaltet, die innerhalb der Schale (10) bereitgestellt ist, wobei die Schale (10) einen offenen Boden aufweist und durch eine horizontale obere Wand (8) und eine Seitenwand (9) umgeben ist, die sich von einer Umfangskante der oberen Wand (8) nach unten erstreckt; und
eine Verbindungseinheit (4), die benachbarte Schwimmmoduleinheiten (2) aus einer Vielzahl von Schwimmmoduleinheiten (2), die in einer horizontalen Richtung angeordnet sind, verbindet, wobei jede von den Schwimmmoduleinheiten (2) eine flexible Membran (14) aufweist, wobei die pneumatische Mehrkomponenten-Schwimmplattform **dadurch gekennzeichnet ist, dass** die Membran von jeder Schwimmmoduleinheit die Luftkammer (3) in eine Luftschicht und eine Wasserschicht unterteilt, und dass die Membran (14) in einem losen Zustand installiert ist.

2. Pneumatische Mehrkomponenten-Schwimmplattform (1) nach Anspruch 1,
wobei die Seitenwand (9) der Schale (10) nach außen geneigt oder von der Umfangskante der oberen Wand (8) vertikal nach unten platziert ist.

3. Pneumatische Mehrkomponenten-Schwimmplattform (1) nach Anspruch 1 oder 2,
wobei die flexible Membran (14) aus Polyester oder Polypropylen besteht.

4. Pneumatische Mehrkomponenten-Schwimmplattform (1) nach einem der Ansprüche 1 bis 3,
wobei die Schwimmmoduleinheit (2) eine Druckeinstelleinheit aufweist, die konfiguriert ist, um Luftdruck (17) in der Luftschicht innerhalb der Luftkammer (3) einzustellen.

5. Pneumatische Mehrkomponenten-Schwimmplattform (1) nach einem der Ansprüche 1 bis 4,
wobei die Verbindungseinheit (4) ein 3D-Fachwerkträger ist.

6. Pneumatische Mehrkomponenten-Schwimmplattform (1) nach einem der Ansprüche 1 bis 5,
wobei die Verbindungseinheit (4) einen Aufnahmeraum für Rettungsleineninfrastruktur (4a) aufweist.

7. Offshore-Schwimmwindturbinenanlage, umfassend:
die pneumatische Mehrkomponenten-Schwimmplattform (1) nach einem der Ansprüche 1 bis 6.

8. Offshore-Schwimmwindturbinenanlage nach Anspruch 7,
wobei die pneumatische Mehrkomponenten-Schwimmplattform (1) eine Andockbucht (25) umgeben durch die Schwimmmoduleinheiten (2) und eine turmartige Festmachvorrichtung (24), die in der Andockbucht (25) installiert ist, aufweist.

9. Offshore-Schwimmwindturbinenanlage nach Anspruch 8,
wobei die turmartige Festmachvorrichtung (24) ein Kugellager (26) aufweist, dessen Außenumfang an die Schwimmmoduleinheit (2) gekoppelt ist, die um die Andockbucht (25) angeordnet ist, und das die pneumatische Mehrkomponenten-Schwimmplattform (1) drehbar stützt, und eine zylindrische Säule (27), die abnehmbar durch einen Innenumfang des Kugellagers (26) gehalten wird und die mit einer Festmachleine (23) verbunden ist.

## Revendications

1. Plate-forme flottante pneumatique à composants multiples (1), comprenant :
une pluralité d'unités de module flottantes (2), chacune de la pluralité d'unités de module flottantes (2) comprenant une coque (10) et une chambre à air (3) prévue à l'intérieur de la coque (10), la coque (10) comportant un fond ouvert et étant entourée par une paroi supérieure horizontale (8) et une paroi latérale (9) s'étendant vers le bas à partir d'un bord périphérique de la paroi supérieure (8) ; et
une unité de raccordement (4) qui raccorde des unités de module flottantes adjacentes (2) d'une pluralité d'unités de module flottantes (2) agencées dans une direction horizontale,
chacune des unités de module flottante (2) comportant une membrane souple (14), la plate-forme flottante pneumatique à composants multiples étant **caractérisée en ce que** la membrane de chaque unité de module flottante divise la chambre à air (3) en une couche d'air et une couche d'eau, et **en ce que**
la membrane (14) est installée dans un état lâche.

2. Plate-forme flottante pneumatique à composants multiples (1), selon la revendication1,
ladite paroi latérale (9) de la coque (10) étant inclinée vers l'extérieur ou placée verticalement vers le bas à partir du bord périphérique de la paroi supérieure (8).

3. Plate-forme flottante pneumatique à composants multiples (1) selon la revendication 1 ou 2,
ladite membrane souple (14) étant composée de polyester ou de polypropylène.

4. Plate-forme flottante pneumatique à composants multiples (1) selon l'une quelconque des revendications 1 à 3,
ladite unité de module flottante (2) comportant une unité de réglage de pression conçue pour régler la pression d'air (17) dans la couche d'air à l'intérieur de la chambre à air (3).

5. Plate-forme flottante pneumatique à composants multiples (1) selon l'une quelconque des revendications 1 à 4,
ladite unité de raccordement (4) étant une poutre en treillis 3D.

6. Plate-forme flottante pneumatique à composants multiples (1) selon l'une quelconque des revendications 1 à 5,
ladite unité de raccordement (4) comportant un espace de réception pour l'infrastructure de réseau vital (4a).

7. Equipement d'éolienne en mer flottant comprenant :
la plate-forme flottante pneumatique à composants multiples (1) selon l'une quelconque des revendications 1 à 6.

8. Equipement d'éolienne en mer flottant selon la revendication 7,
ladite plate-forme flottante pneumatique à composants multiples (1) comportant un puits central (25) entouré par les unités de module flottantes (2) et un dispositif d'amarrage de type tourelle (24) installé dans le puits central (25).

9. Equipement d'éolienne en mer flottant selon la revendication 8,
ledit dispositif d'amarrage de type tourelle (24) comportant un roulement à billes (26) dont la périphérie externe est couplée à l'unité de module flottante (2) disposée autour du puits central (25) et qui supporte de manière rotative la plate-forme flottante pneumatique à composants multiples (1), et une colonne cylindrique (27) qui est maintenue de manière amovible par une périphérie interne du roulement à billes (26) et qui est raccordée à une ligne d'amarrage (23).
